# EUROPÄISCHE PATENTSCHRIFT

(11) **EP 1 872 661 B1**
(45) Veröffentlichungstag und Bekanntmachung des Hinweises auf die Patenterteilung: **28.09.2016**
(21) Anmeldenummer: 07012339.3
(22) Anmeldetag: 23.06.2007
(51) Int. Cl.: A22C 13/00

(54) **SCHLAUCHFÖRMIGE NAHRUNGSMITTELHÜLLE MIT GEKLEBTER, DAUERELASTISCHER LÄNGSNAHT**
TUBULAR FOOD CASING HAVING GLUED, PERMANENTLY ELASTIC LONGITUDINAL SEAM
ENVELOPPE DE PRODUIT ALIMENTAIRE TUBULAIRE AVEC UN JOINT LONGITUDINAL COLLÉ D'ÉLASTICITÉ PERMANENTE

(30) Priorität: 27.06.2006 DE 102006029401
(43) Veröffentlichungstag der Anmeldung: 02.01.2008
(73) Patentinhaber: Kalle GmbH, 65203 Wiesbaden (DE)
(72) Erfinder: Seelgen, Michael, 65510 Idstein (DE); Schlange, Holger, 27628 Wulsbüttel-Hoope (DE)
(74) Vertreter: Plate, Jürgen

(56) Entgegenhaltungen:
- DE-A1- 10 225 619
- DE-A1- 10 360 610
- DE-A1- 19 937 341
- KR-A- 20030 035 644

## Beschreibung

Die Erfindung betrifft eine schlauchförmige Nahrungsmittelhülle mit Innenverstärkung und geklebter Längsnaht, ein Verfahren zu ihrer Herstellung sowie ihre Verwendung als künstliche Wursthülle.

Schlauchförmige Wursthüllen auf Basis von regenerierter Cellulose mit einer Innenverstärkung aus Faserpapier, insbesondere aus Hanffaserpapier, sind seit langem bekannt (s. G. Effenberger, Wursthüllen - Kunstdarm, 3. Aufl. [2006] Deutscher Fachverlag GmbH, Frankfurt a.M., S. 47 - 55). Hergestellt werden diese, allgemein als Cellulose-Faserdärme bezeichneten Hüllen in der Regel nach dem Viskose-Verfahren. Dabei wird zunächst ein Faserpapier zu einem Schlauch mit überlappenden Längskanten geformt, der mit Hilfe einer Ringdüse von außen, von innen oder von beiden Seiten mit Viskose beaufschlagt wird. Die Viskose wird dann in einem Fällbad zu Cellulosehydrat regeneriert.

Cellulose-Faserdärme lassen sich auch nach dem neueren Aminoxid-Verfahren herstellen. Dabei wird die Cellulose in wasserhaltigen Aminoxid, vorzugsweise in N-Methyl-morpholin-N-oxid-Monohydrat, gelöst. Diese Lösung wird auf das zu einem Schlauch geformte Faserpapier aufgebracht. Die Fällung der Cellulose erfolgt dann in einem Bad, das eine verdünnte wäßrige Aminoxid-Lösung enthält. Auf diese Weise läßt sich, wie beim Viskose-Verfahren, eine nahtlose Hülle erhalten. Anders als beim Viskose-Verfahren wird die Cellulose beim Aminoxid-Verfahren nicht chemisch derivatisiert, sondern rein physikalisch gelöst. Nach dem Füllen mit Wurstbrät sind Cellulose-Faserdärme weitgehend transparent.

All diese Verfahren haben jedoch den Nachteil, daß sie sehr kostenintensiv sind. Außerdem wird der Durchmesser der Hülle, d.h. das "Kaliber", durch den Durchmesser des Ringspalts der Ringdüse vorbestimmt, so daß auf einer Anlage nur jeweils ein Kaliber pro eingesetzter Düse produziert werden kann. Ein Wechsel zu einem anderen Kaliber ist somit jedes Mal mit einem Umbau und entsprechendem Stillstand der Anlage verbunden.

Des weiteren sind auch acrylatbeschichtete Textildärme (DE-A 31 47 519 und DE-A 37 04 563) bekannt. Das darin verwendete textile Grundmaterial kann ein verfestigtes Vlies, ein Spinnvlies oder ein Gewebe aus Naturfasern und/oder Kunstfasern sein. Erwähnt sind Fasern aus Baumwolle, Leinen, Wolle, Seide, Celluloseester, Regeneratcellulose, Polyester, Polyamid, Polyacrylnitril, Polypropylen und Polyvinylchlorid. Beschichtet ist das Grundmaterial mit einem Acrylat-Emulsionspolymerisat auf Basis von lipophilen Estern der (Meth)acrylsäure mit niederen Alkanolen, insbesondere von Butylacrylat. Aufgetragen wird die Beschichtung mit Hilfe von üblichen Beschichtungsvorrichtungen, wie Luftrakel, Walzenrakel oder Gummituchrakel, in einem Direktverfahren oder im Umkehrverfahren. Anschließend wird die beschichtete Bahn zum Schlauch geformt und die Naht durch Kleben, Nähen, Siegeln oder Schweißen verschlossen. Durch entsprechende Wahl der Beschichtung kann der acrylatbeschichtete Textildarm wasserdampf- und gasdurchlässig eingestellt werden und ist räucherbar, so daß er auch für Dauerwurst geeignet ist.

In der DE 102 25 619 A1 sind schlauchförmige Hüllen aus acrylatbeschichtetem Textilmaterial offenbart. Die Hülle wird in einzelne Abschnitte unterteilt, die an einem Ende jeweils mit einer geklebten Quernaht verschlossen sind. Die Quernaht kann mit einem Heißschmelz-Kleber (Hotmelt-Kleber) erzeugt sein. Ein Heißschmelz-Kleber ist allgemein ein Kleber aus einem thermoplastischen Kunststoff, der unter Einwirkung von Hitze, gegebenfalls auch Druck, ein Verkleben bewirkt. Polyurethan-Kleber sind lediglich im Zusammenhang mit dem Kleben von (Cellulose-)Faserdärmen offenbart.

Gegenstand der DE 103 60 610 ist eine schlauchförmige Nahrungsmittelhülle, im wesentlichen bestehend aus einem Fasermaterial (Textil, Vlies, Papier), das zu einem Schlauch geformt und mit Protein beschichtet ist. Bei der Herstellung der Hülle wird das zu einem Schlauch geformte Trägermaterial von innen und/oder außen mit der proteinhaltigen Masse beschichtet. Das (proteinhaltige) Beschichtungsmaterial durchdringt die flächenförmige Einlage und verbindet dadurch dessen überlappende Längskanten fest miteinander. Eine Acrylatschicht kann allenfalls als zusätzliche Schicht (über der Proteinschicht) vorkommen.

In der nicht vorveröffentlichten DE 10 2005 056 574 ist eine Nahrungsmittelhülle aus einem ein- oder beidseitig mit Acrylharz beschichteten flächenförmigen Fasermaterial offenbart. Die Hülle kann auch schlauchförmig sein und eine geklebte Längsnaht aufweisen, wie in den Beispielen gezeigt. Die Naht ist dabei mit einem Hotmelt-Kleber erzeugt. Nähere Angaben zu der Art des Hotmelt-Klebers fehlen.

Diese Hüllen weisen jedoch einige Nachteile auf. Zum einen kommt es immer wieder zu unvollständigen Beschichtungen aufgrund mangelnder Anhaftung des eingesetzten Acrylats. Außerdem hat eine Hülle im Bereich der mit einem Polyamid-Hotmelt erzeugte Längsnaht andere Eigenschaften, insbesondere andere Elastizität, Dehnbarkeit und Rauchdurchlässigkeit, als in den übrigen Bereichen. Zudem läßt die Festigkeit der Längsnaht unter der Einwirkung von heißem Wasser, wie beim Einsatz der Hülle für Brühoder Kochwurst üblich, häufig erheblich nach. Generell haben Hüllen mit geklebten Nähten auf Basis von üblichen Hotmelts eine zu geringe Festigkeit für die gestiegenen Ansprüche einer modernen industriellen Wurstfertigung, z.B. automatisierte Kochstraßen, so daß es hier zu vermehrten Ausfällen kommt, die insbesondere durch ein Aufplatzen der Naht verursacht werden.
Es bestand daher die Aufgabe, eine Nahrungsmittelhülle zu entwickeln, die die geschilderten Nachteile nicht mehr oder nur in sehr viel geringerem Maße aufweist. Insbesondere sollen die Vorteile der Flachbeschichtung genutzt sowie Optik und Haptik des Textildarms mit einer über den Umfang annähernd einheitlichen Dehnung und Elastizität des Cellulosedarms vereint werden. Die Oberfläche soll je nach Anforderung von matt bis glänzend einstellbar sein. Ihre Eigenschaften, speziell ihre Wasserdampf-und Sauerstoff-Barriereeigenschaften sowie die Rauchdurchlässigkeit, sollen denen des Textildarms sehr ähnlich, jedoch erheblich gleichmäßiger sein. Die sehr guten mechanischen Eigenschaften des textilen Trägermaterials sollen weiterhin genutzt werden und die Längsnaht den gestiegenen Ansprüchen einer modernen industriellen Wurstfertigung standhalten.

Lösen lassen sich all diese Aufgaben mit einer faserverstärkten Hülle gemäß Anspruch 1, sowie mit einem Verfahren zu ihrer Herstellung gemäß Anspruch 17.

Gegenstand der vorliegenden Erfindung ist demgemäß eine schlauchförmige Nahrungsmittelhülle aus einem beschichteten flächenförmigen Fasermaterial mit geklebter Längsnaht, die dadurch gekennzeichnet ist, daß die Naht mit einem reaktiven Hotmelt-Kleber erzeugt ist.

Der reaktive Hotmelt-Kleber ist ein unter Einwirkung von Feuchtigkeit aushärtender Ein-Komponenten-Hotmelt-Kleber auf Polyurethanbasis. Dieser weist eine Vielzahl an seitenständigen Isocyanat-Gruppen auf, die in Gegenwart von Wasser intermolekular und/oder intramolekular mit Urethangruppen des Polyurethans unter Ausbildung von Harnstoffbrücken reagieren.

Gemäß der Erfindung werden zur Herstellung einer Klebenaht reaktive Hotmelts auf Polyurethanbasis (im folgenden auch als "PUR-Hotmelt" bezeichnet) eingesetzt. Im Vergleich zu den in der DE-A 37 04 563 eingesetzten Polyamidklebern haben diese den Vorteil, daß sie zu einerdauerelastischen, absolut raffstabilen, UV-beständigen Naht führen. Die Elastizitätskoeffizienten von beschichtetem und dem zusätzlich mit Kleber beaufschlagten Trägermaterial sind hierbei annähernd identisch. Besonders bevorzugt sind dabei reaktive PUR-Hotmelt-Kleber mit einer Brookfield-Viskosität von 3.000 bis 7.000 mPa·s, bevorzugt von 4.000 bis 6.000 mPa·s, besonders bevorzugt etwa 5.000 mPa·s, jeweils gemessen mit einem Digital Viskosimeter RVT DV-II, Spindel 27. Liegt die Viskosität unter 3.000 mPa·s, dann sinkt der Kleber zu stark in das Fasermaterial ein. Liegt er dagegen über 7.000 mPa·s, so läßt er sich nur schwer verarbeiten. Die Erweichungstemperatur der reaktiven PUR-Hotmelt-Kleber liegt allgemein unter 160 °C, bevorzugt im Bereich von 90 bis 130 °C. Solche reaktiven PUR-Hotmelt-Kleber sind beispielsweise in der WO 2005/033242 beschrieben. Neben reaktiven Hotmelts auf Polyurethanbasis können allgemein auch solche auf Basis von Polyester oder Polyamid eingesetzt werden. Diese Hotmelt-Kleber haben eine höhere Erweichungstemperatur. Allgemein liegt die Erweichungstemperatur unterhalb von 260 °C. Der Kleber enthält allgemein keine Partikel.

Die erfindungsgemäße Nahrungsmittelhülle hat damit eine dauerelastische, kochfeste und gleichzeitig mechanisch belastbare Naht. Anders als Hüllen, deren Längsnaht mit konventionellen Klebern erzeugt wurde, kann sie problemlos gerafft werden. Die Nähte sind nicht nur kochfest, sondern auch scherstabil, sehr resistent gegen Fettsäuren und sind zudem rauchdurchlässig. Die erfindungsgemäße Nahrungsmittelhülle weist ferner den Vorteil auf, daß die geklebte Naht eine sehr hohe Elastizität bei gleichzeitiger Festigkeit aufweist.

Handelsübliche textile Fasermaterialien sind mit einem Schlichtemittelmeist basierend auf Stärke, modifizierter Stärke oder lubrifizierenden Reagenzien - vorbehandelt. Zusätzlich können auch konservierende Reagenzien in der Ausrüstung enthalten sein. Da die nach dem derzeitigen Stand der Technik verwendeten Mittel das Aufbringen von Acrylatharz und dessen Einbindung in die textile Matrix erheblich stören können, muß es vorher entschlichtet werden. Als störend haben sich auch Schlichtemittel erwiesen, die sich in wäßrigen Beschichtungsdispersionen lösen und anreichern können. Das sind beispielsweise solche auf Basis von Stärke oder modifizierter Stärke, Mischungen von wasserlöslicher Stärke und Polyvinylalkohol, daneben auch lubrifizierende Mittel und Lipide. Es wird angenommen, daß die wesentliche Ursache für die in der Nahrungsmittelhülle gemäß der DE-A 38 26 616 aufgetretenen Flecke ebenfalls Schlichtemittel sind.

Störende Schlichtemittel oder auch störende Konservierungsmittel lassen sich beispielsweise durch Waschen oder enzymatische Behandlung entfernen. Nach dem Entfernen der Schlichtemittel zeigt das textile Trägermaterial häufig eine verminderte mechanische Stabilität. Durch eine Imprägnierung des Trägermaterials läßt sich die geforderte mechanische Stabilität wieder erreichen. Geeignete Schlichtemittel könnten im textilen Material verbleiben.
Überraschenderweise hat sich gezeigt, daß durch die vorgeschaltete Entschlichtung des Textils nicht nur die Dichtheit der beschichteten Hülle zunimmt, sondern auch die Nahtfestigkeit erheblich ansteigt. Die erfindungsgemäße Hülle ist daher auch für industrielle Prozesse zur Herstellung von Koch- oder Brühwürsten geeignet. Im Bereich der Naht platzt sie dabei praktisch nicht mehr auf.

Das flächenförmige Textilmaterial ist ein Gewebe aus Naturfasern. Bevorzugte Materialien sind Baumwolle, Regenerat-Cellulose (Zellwolle), Leinen, Wolle oder Seide. Auch Gemische dieser verschiedenen Materialien lassen sich einsetzen, z.B. Gemische aus Zellwolle und Baumwolle.

In weiteren Ausführungsformen ist die Einlage ein Gewirke, Gestricke, Gelege, verfestigtes Vlies oder Spinnvlies aus Naturfasern, synthetischen Fasern oder Gemischen davon. Diese können des weiteren aus Polyester, Polyamid, Polyolefin (insbesondere Polypropylen), Polyvinylacetat, Polyacrylnitril, Polyvinylchlorid sowie die entsprechenden Copolymere bestehen. Auch diese verschiedenen Materialien lassen sich als Gemische einsetzen (z.B. Gemische aus Baumwolle und Polyester). Besonders bevorzugt ist ein dünnes, in Längs- und Querrichtung verstrecktes Gewebe aus Baumwolle, Zellwolle oder einem Gemisch von Baumwolle und Polyester, Baumwolle und Zellwolle oder Zellwolle und Polyester. Die flächenförmige Einlage kann auch ein Faserpapier sein, insbesondere ein Hanffaserpapier.

Unter dem Begriff "flächenförmig" sollen Materialien verstanden werden, die relativ dünn, jedoch selbst tragend sind. Dicke und Flächengewicht sind auch abhängig von der späteren Verwendung der Hülle. Allgemein beträgt das Flächengewicht 8 bis 300 g/m², bevorzugt 20 bis 200 g/m², besonders bevorzugt 25 bis120 g/m². Faserpapiere weisen bevorzugt ein Gewicht von etwa 15 bis 29 g/m², besonders bevorzugt von 19 bis 25 g/m², auf.

Je nach Anforderung ist das Trägermaterial dehnbar oder praktisch nicht dehnbar. Nicht dehnbare flächenförmige Einlagen sind sinnvoll für Hüllen, bei denen es auf besonders hohe Kaliberkonstanz ankommt.

In einer alternativen Ausführungsform wird das textile Trägermaterial nach der Entschlichtung so vorbehandelt, daß es eine besonders feste Bindung zu dem Beschichtungsmaterial, bei dem es sich bevorzugt um ein Acrylatharz handelt, eingehen kann. Geeignete Materialien sind insbesondere solche, die eine dem Beschichtungsmaterial ähnliche oder nahekommende chemische Konstitution aufweisen, besonders stark verdünnte wäßrige Dispersionen des eigentlichen Beschichtungsmaterials. Dabei ist darauf zu achten, daß nur geringe Mengen verwendet und nicht alle Zwischenräume zwischen den Fasern ausgefüllt werden, um die Anhaftung des Beschichtungsmaterials während der eigentlichen Beschichtung nicht zu beeinträchtigen.

Anschließend kann das Textil zum Zwecke der Versteifung oder zur Erzielung optischer Eigenschaften auf einer oder auf beiden Seiten für die Beschichtung neu ausgerüstet werden. Besonders geeignet sind hierbei Melaminformaldehydharze, hydroxypropylierter Stärke-Ether, andere Naßverfestiger und Appreturen, Acetate (z.B. Vinylacetat/Maleinsäure-di-*n-*butylester), Acrylatharze und Kunststoff-Blends, speziell Emulsionspolymerisate auf Basis von (C₁-C₆)Alkyl(meth)acrylaten, insbesondere Butyl-(meth)acrylat. Der Begriff (Meth)acrylat steht dabei wie üblich für Acrylat und/oder Methacrylat. Einheiten aus anderen Monomeren können hinzutreten, beispielsweise solche aus Styrol, α-Methylstyrol, Vinylacetat/ Maleinsäure-di-*n*-butylester oder Vinylacetat. Der Anteil der Einheiten aus solchen anderen Monomeren sollte 25 Gew.-%, bevorzugt 15 Gew.-%, nicht überschreiten. Geeignete Acrylatharze sind dem Fachmann bekannt, insbesondere aus der DE-A 31 47 519. Sowohl die Entschlichtung als auch die Ausrüstung z.B. mittels Foulardierung (=Tauchbeschichtung) sind dem Textilfachmann hinlänglich bekannt.

Die zum Vorbehandeln verwendeten Materialien können durch Farbstoffe und/oder Farbpigmente eingefärbt sein. Des weiteren kann die Einlage auch ein- oder beidseitig imprägniert werden. Mit einer solchen Imprägnierung kann beispielsweise die Bräthaftung eingestellt oder die Schimmelresistenz erhöht werden. Die Imprägnierung kann auch übertragbare Farb-, Aroma-, Geruchs- und/oder Geschmackskomponenten umfassen (beispielsweise Flüssigrauch). Sie kann jedoch auch später auf das beschichtete Flachmaterial oder die daraus geformte schlauchförmige Hülle aufgetragen werden. Diese Komponenten werden zweckmäßig nur in geringer Menge verwendet.

In einer weiteren Ausführungsform kann das Trägermaterial während der Vorbehandlung mit Farbstoffen und/oder Pigmenten eingefärbt werden. Im Folgeschritt wird das eingefärbte Trägermaterial dann vorzugsweise mit farblosem Acrylat beschichtet. Ebenso kann das Flachmaterial mit einem Flächen- oder Musterdruck versehen werden.

Nach abgeschlossener Vorbehandlung wird die vorzugsweise farblose Einlage dann gleichmäßig ein- bzw. beidseitig beschichtet, bevorzugt mit silikonfreiem Acrylatharz. Die Beschichtung erfolgt besonders vorteilhaft in mehreren, besonders bevorzugt in 2 oder 3 Prozeßschritten mit jeweiliger Zwischentrocknung. Durch Zudosieren von Farbstoffen und/oder Pigmenten in das Acrylat kann ebenfalls eine Einfärbung der Hülle erfolgen. Zum Beschichten können neben Acrylatharzen auch Kollagen und/oder davon abgeleitete Proteine eingesetzt werden, beispielsweise Desamidokollagen.

Es ist jedoch auch möglich, die Beschichtung, insbesondere eine Beschichtung mit Acrylatharz, indirekt in einem Umkehrverfahren aufzubringen.

Die Hülle kann gegebenenfalls zusätzlich Aroma-, Geschmacks- oder Geruchsstoffe erhalten, die auf das Brät übertragbar sein können. Zu nennen ist hier insbesondere Trocken- oder Flüssigrauch. Bevorzugt enthält die Hülle eine Imprägnierung zur Einstellung der Bräthaftung. Die Sauerstoff- und Wasserdampfdurchlässigkeit der erfindungsgemäßen Hülle ist einstellbar.

Eine zusätzliche PVDC-Schicht verleiht der Hülle eine besonders hohe Wasserdampf- und Sauerstoff-Barriere, verhindert so ein Austrocknen der Wurst und die Verfärbung des Bräts durch Oxidation. Das ist besonders bei luftempfindlichen Brätarten, wie Leberwurst, von Bedeutung.

Die Hülle weist allgemein einen Wassergehalt von etwa 2 bis 20 Gew.-%, bevorzugt von etwa 4 bis 10 Gew.-%, auf. Hierbei kommt es darauf an, die Kondensation der polymeren Beschichtung nicht direkt abzuschließen.

Überraschenderweise hat sich gezeigt, daß der Verbund von flächenförmigem Fasermaterial und Beschichtung erheblich besser wird, wenn eine abschließende Kondensation erst auf der Rolle erfolgt. Zwischen der Herstellung der beschichteten Breitrollen und den sich anschließenden Verarbeitungsschritten (Schneiden und Kleben) liegen dann mindestens 2 bis 30 Tage, bevorzugt 15 bis 25 Tage. Dies führt auch zu einer noch weiter verbesserten Nahtfestigkeit.

Die erfindungsgemäße Nahrungsmittelhülle weist eine Wasserdampfdurchlässigkeit (nach DIN 53 122) von 2 bis 2000 g/m²·d, bevorzugt von 5 bis 1500 g/m²·d auf. Ihre Sauerstoffdurchlässigkeit beträgt allgemein 100 bis 1000 cm²/m²·d (bestimmt gemäß DIN 53 380 bei 53 % relativer Feuchte), gemessen an einem 5 cm² großen Stück der Hülle mit einem Wassergehalt von 8 bis 10 Gew.-% und einem Weichmachergehalt von etwa 15 Gew.-%.

Üblicherweise ist die Hülle rauchdurchlässig, kann aber mit entsprechender Beschichtung auch rauchundurchlässig sein. Das Dehnverhalten der Hülle wird durch die Art und Dicke der Beschichtung bestimmt, aber auch durch Art und Stärke des flächenförmigen Fasermaterials. So kann der Gesamtdehnungsanteil (elastische und plastische Dehnung) zwischen 1 und 20 % variieren, bevorzugt beträgt der elastische Dehnungsanteil. zwischen 2 und 6 %.

Verfahren und Vorrichtungen zur Herstellung der erfindungsgemäßen Hülle sind dem Fachmann an sich bekannt (s. G. Effenberger, Wursthüllen - Kunstdarm, 3. Aufl. [2006] Deutscher Fachverlag GmbH, Frankfurt/Main, S. 71/72).

Dabei wird das flächenförmige Trägermaterial vorzugsweise mehrfach mit Acrylatharz beschichtet nach einem Flachbeschichtungsverfahren. Die Beschichtung wird dann getrocknet und sollte zudem einige Zeit kondensieren bzw. aushärten. Geeignete Verfahren und Vorrichtungen dafür sind dem Fachmann bekannt. In einem weiteren Schritt kann gegebenenfalls ein letzter Beschichtungsstrich mit PVDC oder einem VDC-Copolymer erfolgen. Nach dem Trocknen ist ein so beschichtetes Material kaum noch durchlässig für Wasserdampf und Luftsauerstoff, kann also für sogenannte "Barrierehüllen" eingesetzt werden. Danach wird die beschichtete Flachmaterial in einzelne Bahnen geschnitten. Falls gewünscht, kann es vor oder nach dem Schneiden bedruckt werden, zweckmäßig in einem Flexodruckverfahren. Die einzelnen Bahnen werden dann über eine Formschulter in eine Schlauchform mit überlappenden Längskanten von 2 bis14 mm, bevorzugt 6 bis 12 mm gebracht, und die Überlappung dann mit einem reaktiven Hotmelt-Kleber fixiert. Dabei wird die Verklebung vorzugsweise so durchgeführt, daß keine überstehende "Fahne" verbleibt. Das hat den weiteren Vorteil, daß Bakterien oder andere Mikroorganismen praktisch nicht mehr durch den Nahtbereich eindringen können.

Es hat sich gezeigt, daß es für die Qualität der Klebenaht wichtig ist, daß der verwendete reaktive Hotmelt-Kleber nach dem Aufschmelzen nicht einfach in Raupenform aufgebracht wird, sondern vielmehr ein definierter Dünnfilm der Schmelze auf die Oberseite der ersten Längsnaht appliziert wird. Nur dann bildet sich nach dem Fügen der beiden Längsseiten ein gleichmäßiger Klebefilm aus. Im Falle des üblichen Raupenauftrags hingegen ergibt sich eine ungleichmäßig konturierte Klebefläche, welche häufig einseitig aus dem Nahtbereich herausläuft und dann zum Verkleben der Rollenware führt. Auch leidet die Nahtfestigkeit unter der ungleichmäßigen Klebefläche.

Weiter hat sich gezeigt, daß die mit dem reaktiven Hotmelt-Kleber erzeugte Klebenaht an Festigkeit zunimmt, wenn sie unter definierten Bedingungen gelagert wird. Besonders zweckmäßig läßt man den verklebten "Rohschlauch" bei 25 bis 75% relativer Feuchte und 20 bis 45 °C für 3 bis 7 Tage, besonders bevorzugt bei etwa 50% relativer Feuchte und etwa 35 °C für etwa 7 Tage ausreagieren. Entscheidend ist dabei, daß die für die Aushärtung erforderliche Menge Wasser bereits während der Schlauchformung eingebracht wird und die Feuchte der Umgebungsluft während der Aushärtung nur einer Diffusion aus dem geklebten Rohschlauch entgegenwirkt.

In einer besonderen Ausführungsform lassen sich so Schläuche mit beliebigen Formen, bevorzugt mit unregelmäßig konturierten Rändern herstellen. Die dabei entstehenden, unregelmäßigen Hüllen lassen sich ebenfalls als Nahrungsmittelhüllen, insbesondere als künstliche Wursthüllen mit Naturdarmoptik für anspruchsvollere Anwendungen einsetzen.

Die erfindungsgemäße Hülle läßt sich auf üblichen Füllmaschinen mit pastösen bis leicht sämigen Nahrungsmitteln füllen, insbesondere mit Wurstbrät. Bei der Verwendung als Wursthülle wird sie zweckmäßig in geraffter Form (als sogenannte Raffraupe) oder in Form von Einzelabschnitten eingesetzt. Die Einzelabschnitte sind dabei an einem Ende verschlossen, beispielsweise durch einen Metall- oder Kunststoff-Clip, durch Abbinden mit Garn, durch Verknoten, Verkleben, Siegeln oder Schweißen oder Abnähen (wobei die Naht bzw. die Hülle oder der Hüllenabschnitt gerade, gebogen oder speziell geformt sein kann). Die Abschnitte werden einzeln auf das Füllrohr der Füllvorrichtung geschoben, mit Brät gefüllt und verschlossen. Die Weiterverarbeitung kann dann wie üblich durch Brühen, Kochen, Räuchern, Reifen usw. erfolgen.

Teil der vorliegenden Erfindung ist demgemäß auch die Verwendung der erfindungsgemäßen Hülle als künstliche Wursthülle, insbesondere für Roh-, Brüh- oder Kochwurst, oder als Umhüllung für Käse oder Fisch.

Falls gewünscht, kann die erfindungsgemäße schlauchförmige Nahrungsmittelhülle mit einem Netz umhüllt werden, das beispielsweise wabenförmige, 8-eckige, quadratische oder rechteckige Strukturen umfaßt. Das Netz ist gegebenenfalls auch elastisch.

Die folgenden Beispiele sollen die Erfindung illustrieren. Prozente sind darin Gewichtsprozente, soweit nicht anders angegeben oder aus dem Zusammenhang ersichtlich.

### Beispiel 1

Ein Gewebe aus 100% Zellwolle mit einem Flächengewicht von 58g/m² wurde enzymatisch entschlichtet und durch Rakelantrag mit farblosem Acrylatharz beschichtet. Nach Trocknung und Kondensation hatte das so beschichtete Textil ein Gesamtgewicht von 92 g/m². Die Breitware wurde in Bahnen mit einer Breite von 152 mm geschnitten, die dann über eine Formschulter zu Schläuchen geformt wurden. Die 8 mm überlappenden Längskanten wurden mit einem reaktiven PUR-Hotmelt-Kleber verklebt. Die Hülle wurde abgebunden und mit Salamibrät gefüllt. Nach einer Reifezeit von 12 Tagen war die textile Struktur vorhanden, gleichsam aber die Hülle leicht transparent und somit das Brät sichtbar. Das Erscheinungsbild wurde als leicht glänzend-transparenter Textildarm beurteilt.

### Beispiel 2

Ein Mischgewebe aus 80% Baumwolle und 20% Polyester mit einem Gewicht von 102 g/m² wurde enzymatisch entschlichtet, mit einem Butylacrylat-Emulsionspolymerisat foulardiert und durch Rakelantrag mit eingefärbtem Acrylat beschichtet. Nach abschließendem Antrag einer PVDC-Außenschicht, Trocknung und Kondensation hatte das so beschichtete Textil ein Gesamtgewicht von 135 g/m². Die Breitware wurde in Bahnen mit einer Breite von 165 mm geschnitten, die dann zu Schläuchen geformt wurden. Die 9 mm überlappenden Längskanten wurden mit einem raktiven PUR-Hotmelt-Kleber verklebt. Die auf diese Weise hergestellten Wursthüllen wurden mit Kochwurstbrät gefüllt. Sie hatten ein Füllkaliber von 52 mm. Es resultierten fettdichte Würste mit einer textilen Optik, deren Naht elastisch und fettdicht war.

Nach einer Reife- und Räucherzeit von 5 Tagen wurde das Erscheinungsbild als farbecht, matt und textilecht beurteilt.

## Patentansprüche

1. Schlauchförmige Nahrungsmittelhülle aus einem beschichteten flächenförmigen Trägermaterial mit geklebter Längsnaht, **dadurch gekennzeichnet, daß** das flächenförmige Trägermaterial ein Gewebe, Gewirke, Gestricke, Gelege, verfestigtes Vlies oder Spinnvlies ist, das mit einem Acrylatharz beschichtet ist und die Naht mit einem reaktiven Hotmelt-Kleber erzeugt ist, wobei als Hotmelt-Kleber ein unter Einwirkung von Feuchtigkeit aushärtender Ein-Komponenten-Hotmelt-Kleber auf Polyurethanbasis ist.

2. Nahrungsmittelhülle gemäß Anspruch 1, **dadurch gekennzeichnet, daß** das flächenförmige Trägermaterial natürliche Fasern, bevorzugt Baumwolle, Leinen, Zellwolle, Wolle und/oder Seide, und/oder synthetische Fasern, bevorzugt Fasern aus Polyester, Polyamid, Polyolefin, Polyvinylacetat, Polyacrylnitril, Polyvinylchlorid, oder aus entsprechenden Copolymeren, umfaßt.

3. Nahrungsmittelhülle gemäß Anspruch 1 oder 2, **dadurch gekennzeichnet, daß** das flächenförmige Trägermaterial ein Gewicht von 8 bis 300 g/m², bevorzugt 20 bis 200 g/m², besonders bevorzugt 25 bis 120 g/m², aufweist.

4. Nahrungsmittelhülle gemäß einem oder mehreren der Ansprüche 1 bis 3, **dadurch gekennzeichnet, daß** ihr Gesamtgewicht im trockenen Zustand 40 bis 400 g/m², bevorzugt 60 bis 300 g/m², besonders bevorzugt 80 bis 200 g/m², beträgt.

5. Nahrungsmittelhülle gemäß einem oder mehreren der Ansprüche 1 bis 4, **dadurch gekennzeichnet, daß** das flächenförmige Trägermaterial imprägniert ist.

6. Nahrungsmittelhülle gemäß Anspruch 5, **dadurch gekennzeichnet, daß** das flächenförmige Trägermaterial mit Melamin/Formaldehyd-Harz, hydroxypropylierten Stärkeethern, Copolymeren mit Einheiten aus Vinylacetat, speziell Vinylacetat/ Maleinsäure-di-*n*-butylester-Copolymere, Acrylat-Harzen, bevorzugt Emulsionspolymerisaten mit Einheiten aus (C₁-C₆)Alkyl-(meth)acrylaten, Polyamin-Polyamid-Epichlorhydrin-Harzen imprägniert ist.

7. Nahrungsmittelhülle gemäß einem oder mehreren der Ansprüche 1 bis 6, **dadurch gekennzeichnet, daß** das flächenförmige Trägermaterial mit Farbstoffen und/oder Farbpigmenten eingefärbt ist.

8. Nahrungsmittelhülle gemäß Anspruch 7, **dadurch gekennzeichnet, daß** ein gefärbtes Trägermaterial mit einer ungefärbten Beschichtung kombiniert ist.

9. Nahrungsmittelhülle gemäß einem oder mehreren der Ansprüche 1 bis 6, **dadurch gekennzeichnet, daß** das textile Trägermaterial ungefärbt und mit einer gefärbten Beschichtung kombiniert ist.

10. Nahrungsmittelhülle gemäß einem oder mehreren der Ansprüche 1 bis 9, **dadurch gekennzeichnet, daß** die Beschichtung (Meth)acrylat-Polymere oder-copolymere umfaßt.

11. Nahrungsmittelhülle gemäß einem oder mehreren der Ansprüche 1 bis 10, **dadurch gekennzeichnet, daß** sie auf der Innen- und/oder Außenseite zusätzlich mindestens eine Schicht mit Barriereeigenschaften für Sauerstoff und/ oder Wasserdampf aufweist, bevorzugt eine Schicht aus Polyvinylidenchlorid oder aus Copolymeren mit Vinylidenchlorid-Einheiten.

12. Nahrungsmittelhülle gemäß einem oder mehreren der Ansprüche 1 bis 11, **dadurch gekennzeichnet, daß** sie auf der Innenseite eine Imprägnierung oder Beschichtung aufweist, bevorzugt mit Mitteln, die zur Einstellung der Bräthaftung oder zur Verbesserung der Schimmelresistenz dienen, und/oder Mitteln, die übertragbaren Farb-, Aroma-, Geruchs- und/oder Geschmacksstoffe umfassen.

13. Nahrungsmittelhülle gemäß einem oder mehreren der Ansprüche 1 bis 12, **dadurch gekennzeichnet, daß** sie von einem elastischen oder nicht-elastischen Netz umgeben ist.

14. Nahrungsmittelhülle gemäß einem oder mehreren der Ansprüche 1 bis 13, **dadurch gekennzeichnet, daß** sie entlang der Längsnaht vollständig verklebt ist, so daß kein überstehender Rand verbleibt.

15. Nahrungsmittelhülle gemäß einem oder mehreren der Ansprüche 1 bis 14, **dadurch gekennzeichnet, daß** sie zu Raffraupen oder einseitig verschlossenen Abschnitten konfektioniert ist.

16. Nahrungsmittelhülle gemäß einem oder mehreren der Ansprüche 1 bis 14, **dadurch gekennzeichnet, daß** sie als Abschnitt konfektioniert und einseitig durch Clip, Clip mit Schlaufe, Abbindung, Knoten, Verklebung, Siegeln, Schweißen, Abnähen oder eine Kombination aus mehreren der genannten Methoden verschlossen ist.

17. Verfahren zur Herstellung einer Nahrungsmittelhülle gemäß einem oder mehreren der Ansprüche 1 bis 14, **dadurch gekennzeichnet, daß** es die folgenden Schritte in der angegebenen Reihenfolge umfaßt:
a) Bereitstellen eines flächenförmigen Fasermaterials;
b) gegebenenfalls Entfernen eines Schlichtemittels;
c) gegebenenfalls Behandeln des flächenförmigen Fasermaterials mit einem Imprägnierungsmittel;
d) gegebenenfalls Bedrucken des flächenförmigen Fasermaterials,
e) vollflächiges Beaufschlagen einer oder beider Seiten des flächenförmigen Fasermaterials mit Acrylatharz in einem oder mehreren Strichen;
f) gegebenenfalls vollflächiges Beaufschlagen einer oder beider Seiten des beschichteten flächenförmigen Fasermaterials mit einer Barriereschicht;
g) Auskondensieren der Beschichtung(en) auf der Rolle;
h) gegebenenfalls Schneiden der beschichtete Breitrolle in Bahnen passender Breite;
i) gegebenenfalls Bedrucken der Bahnen;
j) Formen der Bahnen über eine Formschulter zu einem Schlauch mit überlappenden Längskanten, wobei der Überlappungsbereich bevorzugt 2 bis14 mm, besonders bevorzugt 4 bis12 mm, breit ist;
k) Verkleben des Überlappungsbereichs mit einem reaktiven PUR-Hotmelt-Kleber;
l) Aushärten der Klebenaht bei 25 bis 75% relativer Feuchte und 20 bis 45 °C für 3 bis 7 Tage;
m) gegebenenfalls Konfektionieren der Nahrungsmittelhülle.

18. Verfahren gemäß Anspruch 17, **dadurch gekennzeichnet, daß** ein reaktiver PUR-Hotmelt-Kleber mit einer Brookfield-Viskosität von 3.000 bis 7.000 mPa·s, bevorzugt von 4.000 bis 6.000 mPa·s, besonders bevorzugt etwa 5.000 mPa·s, eingesetzt wird.

19. Verfahren gemäß Anspruch 17 oder 18, **dadurch gekennzeichnet, daß** der reaktive Hotmelt-Kleber als dünner Schmelzefilm auf die Längskante der Hülle aufgebracht wird, die nach dem Fügen auf der Unterseite des Überlappungsbereichs liegt.

20. Verwendung der Nahrungsmittelhülle gemäß einem oder mehreren der Ansprüche 1 bis 16 als künstliche Wursthülle, bevorzugt für Roh-, Brüh- oder Kochwurst, oder als Umhüllung für Käse oder Fisch.

## Claims

1. A tubular food casing made of a coated flat support material having a glued longitudinal seam, wherein the flat support material is a woven fabric, loop-formingly knitted fabric, loop-drawingly knitted fabric, laid fabric, consolidated nonwoven or spunbonded nonwoven which is coated with an acrylic resin, and the seam is generated using a reactive hotmelt glue, where the hotmelt glue is a one-component polyurethane-based hotmelt glue curing under the action of moisture.

2. The food casing as claimed in claim 1, wherein the flat support material comprises natural fibers, preferably cotton, linen, viscose staple, wool and/or silk, and/or synthetic fibers, preferably fibers made of polyester, polyamide, polyolefin, poly(vinyl acetate), polyacrylonitrile, poly(vinyl chloride), or corresponding copolymers.

3. The food casing as claimed in claim 1 or 2, wherein the flat support material has a weight of 8 to 300 g/m², preferably 20 to 200 g/m², particularly preferably 25 to 120 g/m².

4. The food casing as claimed in one or more of claims 1 to 3, wherein its total weight in the dry state is 40 to 400 g/m², preferably 60 to 300 g/m², particularly preferably 80 to 200 g/m².

5. The food casing as claimed in one or more of claims 1 to 4, wherein the flat support material is impregnated.

6. The food casing as claimed in claim 5, wherein the flat support material is impregnated with melamine/formaldehyde resin, hydroxypropylated starch ethers, copolymers having units of vinyl acetate, especially vinyl acetate/di-n-butyl maleate copolymers, acrylic resins, preferably emulsion polymers having units of (C₁-C₆)alkyl (meth)acrylates, polyamine-polyamide-epichlorohydrin resins.

7. The food casing as claimed in one or more of claims 1 to 6, wherein the flat support material is colored with dyes and/or color pigments.

8. The food casing as claimed in claim 7, wherein a colored support material is combined with a non-colored coating.

9. The food casing as claimed in one or more of claims 1 to 6, wherein the textile support material is non-colored and is combined with a colored coating.

10. The food casing as claimed in one or more of claims 1 to 9, wherein the coating comprises (meth)acrylic polymers or copolymers.

11. The food casing as claimed in one or more of claims 1 to 10, wherein, on the inside and/or outside, it additionally has at least one layer having barrier properties for oxygen and/or water vapor, preferably a layer of poly(vinylidene chloride) or of copolymers having vinylidene chloride units.

12. The food casing as claimed in one or more of claims 1 to 11, wherein, on the inside, it has an impregnation or coating, preferably with agents which serve to establish the sausage emulsion adhesion or for improving the mold resistance, and/or agents which comprise transferable color, aroma, odor and/or taste substances.

13. The food casing as claimed in one or more of claims 1 to 12, wherein it is enclosed by an elastic or nonelastic net.

14. The food casing as claimed in one or more of claims 1 to 13, wherein it is completely glued along the longitudinal seam so that no projecting edge remains.

15. The food casing as claimed in one or more of claims 1 to 14, wherein it is finally processed into shirred sticks or sections closed at one end.

16. The food casing as claimed in one or more of claims 1 to 14, wherein it is finally processed as a section and closed at one end by a clip, clip with loop, tie, knots, gluing, sealing, welding, stitching or a combination of a plurality of said methods.

17. A process for producing a food casing as claimed in one or more of claims 1 to 14, which comprises the following steps in the stated sequence:
a) providing a flat fibrous material;
b) if appropriate removing a sizing material;
c) if appropriate treating the flat fibrous material with an impregnating agent;
d) if appropriate printing the flat fibrous material,
e) charging the whole surface of one or both sides of the flat fibrous material with acrylic resin in one or more strokes;
f) if appropriate whole-surface charging of one or both sides of the coated flat fibrous material with a barrier layer;
g) condensing the coating(s) on the roll;
h) if appropriate cutting the coated whole-width roll into strips of appropriate width;
i) if appropriate printing the strips;
j) forming the strips via a forming shoulder to give a tube having overlapping longitudinal edges, the overlapping region preferably being 2 to 14 mm, particularly preferably 4 to 12 mm, wide;
k) gluing the overlapping region using a reactive PUR hotmelt glue;
l) curing the glued seam at 25 to 75 % relative humidity and 20 to 45 °C for 3 to 7 days;
m) if appropriate finally processing the food casing.

18. The process as claimed in claim 17, wherein use is made of a reactive PUR hotmelt glue having a Brookfield viscosity of 3000 to 7000 mPa·s, preferably of 4000 to 6000 mPa·s, particularly preferably about 5000 mPa·s.

19. The process as claimed in claim 17 or 18, wherein the reactive hotmelt glue is applied as a thin melt film to the longitudinal edge of the casing which after joining is on the lower side of the overlapping region.

20. The use of the food casing as claimed in one or more of claims 1 to 16 as artificial sausage casing, preferably for raw sausage, scalded-emulsion sausage, or cooked-meat sausage, or as wrapping for cheese or fish.

## Revendications

1. Enveloppe tubulaire de produit alimentaire, en un support surfacique enduit, avec une soudure longitudinale collée, **caractérisée en ce que** le support surfacique est un tissu, un matériau à mailles, tricot ou tulle, un non-tissé ou une nappe de fils désorientés, qui est enduit d'une résine acrylique, et **en ce que** la soudure est produite avec une colle thermofusible réactive, une colle thermofusible à un composant à base de polyuréthane qui durcit sous l'action de l'humidité étant utilisée comme colle thermofusible.

2. Enveloppe de produit alimentaire selon la revendication 1, **caractérisée en ce que** le support surfacique comprend des fibres naturelles, de préférence du coton, du lin, de la laine de cellulose, de la laine et/ou de la soie, et/ou des fibres synthétiques, de préférence des fibres en polyester, en polyamide, en polyoléfine, en acétate polyvinylique, en polyacrylonitrile, en polychlorure de vinyle, ou en d'autres copolymères correspondants.

3. Enveloppe de produit alimentaire selon la revendication 1 ou 2, **caractérisée en ce que** le support surfacique a un poids de 8 à 300 g/m², de préférence de 20 à 200 g/m², particulièrement de préférence de 25 à 120 g/m².

4. Enveloppe de produit alimentaire selon une ou plusieurs des revendications 1 à 3, **caractérisée en ce que** son poids total à l'état sec vaut de 40 à 400 g/m², de préférence de 60 à 300 g/m², particulièrement de préférence de 80 à 200 g/m².

5. Enveloppe de produit alimentaire selon une ou plusieurs des revendications 1 à 4, **caractérisée en ce que** le support surfacique est imprégné.

6. Enveloppe de produit alimentaire selon la revendication 5, **caractérisée en ce que** le support surfacique est imprégné de résine mélamine-formaldéhyde, d'éthers d'amidon hydroxypropylé, de copolymères avec des unités d'acétate de vinyle, en particulier de copolymères de di-n-ester butylique d'acétate de vinyle / d'acide maléique, de résines acryliques, de préférence de polymérisats en émulsion avec des unités de (méth)acrylates d'alkyle (C₁-C₆), de résines de polyamine-polyamide-épichlorhydrine.

7. Enveloppe de produit alimentaire selon une ou plusieurs des revendications 1 à 6, **caractérisée en ce que** le support surfacique est coloré avec des colorants et/ou des pigments colorants.

8. Enveloppe de produit alimentaire selon la revendication 7, **caractérisée en ce qu'**un support coloré est combiné à un enduit non coloré.

9. Enveloppe de produit alimentaire selon une ou plusieurs des revendications 1 à 6, **caractérisée en ce que** le support textile est non coloré et est combiné à un enduit coloré.

10. Enveloppe de produit alimentaire selon une ou plusieurs des revendications 1 à 9, **caractérisée en ce que** l'enduit comprend un polymère ou copolymère de (méth)acrylate.

11. Enveloppe de produit alimentaire selon une ou plusieurs des revendications 1 à 10, **caractérisée en ce qu'**elle comporte en plus sur sa face intérieure et/ou extérieure au moins une couche ayant une propriété de barrage à l'oxygène et/ou à la vapeur d'eau, de préférence une couche de chlorure de polyvinylidène ou de copolymères avec des unités de chlorure de vinylidène.

12. Enveloppe de produit alimentaire selon une ou plusieurs des revendications 1 à 11, **caractérisée en ce qu'**elle comporte sur sa face intérieure une imprégnation ou un enduit, de préférence avec des agents qui servent à régler l'adhérence à la cuisson ou à améliorer la résistance aux moisissures et/ou des agents qui comprennent des substances transmissibles de couleur, d'arôme, de parfum et/ou de goût.

13. Enveloppe de produit alimentaire selon une ou plusieurs des revendications 1 à 12, **caractérisée en ce qu'**elle est entourée par un filet élastique ou non élastique.

14. Enveloppe de produit alimentaire selon une ou plusieurs des revendications 1 à 13, **caractérisée en ce qu'**elle est complètement collée le long de la soudure longitudinale de telle sorte qu'il ne reste pas de bord qui dépasse.

15. Enveloppe de produit alimentaire selon une ou plusieurs des revendications 1 à 14, **caractérisée en ce qu'**elle est confectionnée sous forme de chenille serrée ou de tronçons fermés d'un côté.

16. Enveloppe de produit alimentaire selon une ou plusieurs des revendications 1 à 14, **caractérisée en ce qu'**elle est confectionnée sous forme de tronçon et fermée d'un côté par une agrafe, une agrafe avec boucle, un lien, un noeud, un collage, un scellage, une soudure, une couture ou une combinaison de plusieurs des méthodes susmentionnées.

17. Procédé pour la fabrication d'une enveloppe de produit alimentaire selon une ou plusieurs des revendications 1 à 14, **caractérisé en ce qu'**il comprend les étapes suivantes dans l'ordre indiqué :
a) préparation d'un matériau en fibres en forme de surface ;
b) élimination éventuelle d'un produit d'encollage ;
c) traitement éventuel du matériau en fibres surfacique avec un agent d'imprégnation ;
d) impression éventuelle du matériau en fibres surfacique ;
e) application, sur toute la surface d'une ou des deux faces du matériau en fibres surfacique, d'une résine acrylique en une ou plusieurs passes ;
f) application éventuelle, sur toute la surface d'une ou des deux faces du matériau en fibres surfacique enduit, d'une couche formant barrage ;
g) condensation du ou des enduits sur le rouleau ;
h) découpage éventuel du rouleau large enduit en bandes de largeur appropriée ;
i) impression éventuelle des bandes ;
j) formation des bandes par l'intermédiaire d'un épaulement de mise en forme pour obtenir un tuyau avec des bords longitudinaux qui se chevauchent, la zone de chevauchement ayant une largeur de préférence de 2 à 14 mm, particulièrement de préférence de 4 à 12 mm ;
k) collage de la zone de chevauchement avec une colle thermofusible réactive à base de polyuréthane ;
l) durcissement de la soudure collée par 25 à 75 % d'humidité relative et 20 à 45 °C pendant 3 à 7 jours ;
m) confection éventuelle de l'enveloppe de produit alimentaire.

18. Procédé selon la revendication 17, **caractérisé en ce que** l'on utilise une colle thermofusible réactive à base de polyuréthane avec une viscosité de Brookfield de 3 000 à 7 000 mPa.s, de préférence de 4 000 à 6 000 mPa.s, particulièrement de préférence d'environ 5 000 mPa.s.

19. Procédé selon la revendication 17 ou 18, **caractérisé en ce que** l'on applique la colle thermofusible réactive sous la forme d'un mince film fondu sur l'arête longitudinale de l'enveloppe qui se trouve sur le dessous de la zone de chevauchement après l'assemblage.

20. Utilisation de l'enveloppe de produit alimentaire selon une ou plusieurs des revendications 1 à 16 comme boyau artificiel de saucisse, de préférence pour des saucisses sèches, des saucisses ou saucissons cuits, ou comme enveloppe pour du fromage ou du poisson.
